# EUROPEAN PATENT SPECIFICATION

(11) **EP 1 750 826 B1**
(45) Date of publication and mention of the grant of the patent: **23.09.2009**
(21) Application number: 04735427.9
(22) Date of filing: 28.05.2004
(51) Int. Cl.: B01D 29/66, B01D 65/02

(54) **METHOD AND APPARATUS FOR SEPARATION OF SOLIDS AND LIQUID SUSPENSIONS BY FILTER UNCLOGGING AIDED FILTRATION**
VERFAHREN UND VORRICHTUNG ZUR TRENNUNG VON FESTSTOFFEN UND FLÜSSIGKEITSSUSPENSIONEN DURCH FILTERABREINIGUNGSUNTERSTÜTZTE FILTRATION
PROCEDE ET APPAREIL POUR LA SEPARATION DE SOLIDES ET DE SUSPENSIONS LIQUIDES AU MOYEN D'UNE FILTRATION ASSISTEE PAR DESOBSTRUCTION DES FILTRES

(43) Date of publication of application: 14.02.2007
(60) Divisional application: 09165221.4
(73) Proprietor: Universidade Évora, 7000-803 Évora (PT)
(72) Inventor: Franco Antunes, Carlos Manuel, P-7000-737 vora (PT); Dias Fernandes, Jaime, P-1700 Lisboa (PT)
(74) Representative: Ferreira, Maria Silvina
(86) International application number: PCT/PT2004/000009
(87) International publication number: WO 2005/115584

(56) References cited:
- DE-A1- 19 717 448
- US-A- 4 702 845
- US-A- 5 217 509
- US-A- 5 591 240
- US-A1- 2002 127 630

## Description

### Technical Field of the invention

The present invention relates to size separation by filtration of solid particles in suspension, using syntetic fabrics of known mesh, and to a process of avoiding filter clogging by using vacuum to simultaneously revert suspension flow direction and produce air suction, and in a particular form, to an apparatus for separating and collecting fungal spores. In this particular form, the spores must be bigger than the mesh of the second filter, which is 10 µm and smaller than the mesh of the first filter, which is 44 µm. The mixed solid particles with spores in suspension can be variable in diameter, but should be all bigger than 44 µm.

### Background art

US 5 217 509 discloses a filtration system for cleaning air, wherein the air filters of the filtration system are cleaned via backflushing of the airstream.

DE 197 17 448 A1 discloses a device and a method for separating particles from a liquid suspension, wherein the filter is cleaned by applying a flushing means thereonto by means of nozzles.

U.S. patent US4113618, allows the simple filtration of solids in suspension, in order to be discarded and then collected. Additionally, clogging is tackled using the reverse flow direction through a set of hydraulic valves, and the elastic properties of the filtration fabric to allow the collection of the filter cake. The filter cake is collected by the use of active carbon that condenses part of the suspension particles though electrostatic forces, otherwise they would return to the suspension during the flaking off the fabric, that must occur to discard the filter cake. The filtration is limited by the formation of a filtration layer and by the mesh of the fabric used, which must lie between 100 (150 µm) and 350 mesh (40 µm) to be effective. This dimensions, that are bigger than the size of the particles to be recovered, allow the passage of some of the particles that should be recovered before and during the formation of the filtration layer.

Japanese patent JP57053211, and U.S. patent US6159373 concerns to processes for cleaning filters used to clarify liquids from a suspension using filtration. The processes used to avoid clogging are performed after stopping the filtration process, and involve the return of the solid particles to the suspension, allowing the recovery of the clean liquid, and discard the unwanted solids in a concentrated suspension. JP57053211 uses a process of flowing compressed air through the filter elements to ressuspend the precipitated solid particles, whereas US6159373 uses a process of high liquid pressure to accomplish said ressuspension.

Other methods currently employed to separate or filtrate solids in suspension use low efficiency processes, loosing great amount of the solids to be recovered, or being unable to recover all the liquid, that should be clarified. They are unable to separate and Collect the solids in suspension, and have problems to avoid clogging of filter membranes, when these are used. All this problems are greatly enhanced when the size of the particles to be separated decreased, especially below 50 µm.

Furthermore, these methods do not allow the separation of solid particles by their sizes, when they are all in the same suspension, neither the collection of the desired fractions.

Currently there is no apparatus to separate fungus spores from other particles in suspensions, in the 0.1 - 1000 µm size range, because of the water volume used, and of the clogging problem of the filter membranes, which becomes more important when the concentration of the suspension increases near the collector filter membrane, due to the formation of a thin layer of particles over the said membrane, that progressively slows and/or stops the filtration process.

### Summary of the invention

The main problem to be solved by present invention relates to separation and collection of solid particles in suspension, especially if particles to be separate have sizes under 200 µm of diameter.

The invention provides a method according to claim 1. Further embodiments of the invention are described in the dependent claims.

The solution is based on a process of filtration using series of filters of different mesh, made of appropriate filter fabrics, in a closed vacuum circuit. This process of filtration is aided by a process of continuous filter unclogging based on reverse flow of the suspension and air suction through the filter membranes, which also allows the drying and collection of the desired solid fractions.

According to the the invention the method of separation by unclogging aided filtration of solid particles in suspension is performed in a close circuit, using vacuum as flowing force, and as a way to reverse flow direction of suspension and obtain air suction through the filter fabrics, allowing a light drying and the collection of the desired fractions of solid particles.

An apparatus for carrying out the above mentioned method comprises three interconnected systems:
a) Filtration system, with several reservoirs, wherein the said suspension flows, and the solid particles are separated by size filtration by appropriate filters;
b) Vacuum system wherein vacuum is achieved and applied to the reservoirs, providing the flow force that allows the filtration to occur, and the reverse suspension flow direction and air suction to take place through the filter fabrics to unclog the filters;
c) Control system, wherein the vacuum can be checked by monitoring elements and controlled through appropriate valves that regulate air flow to and from the reservoirs; this system also allows the control of suspension flow direction, by means of appropriate valves.

According to the invention is unclogging of the filter fabrics during the filtration process includes reversing the flow suspension direction and air suction through said filter fabric, and optionally the repetition of these procedures as many times as necessary to make a continuous non-uniform flow of the suspension through the filter fabric, allowing the passage of all the suspension through the filter to obtain the dry solid particles residue in the surface of the filter fabric.

### Brief description of the drawings

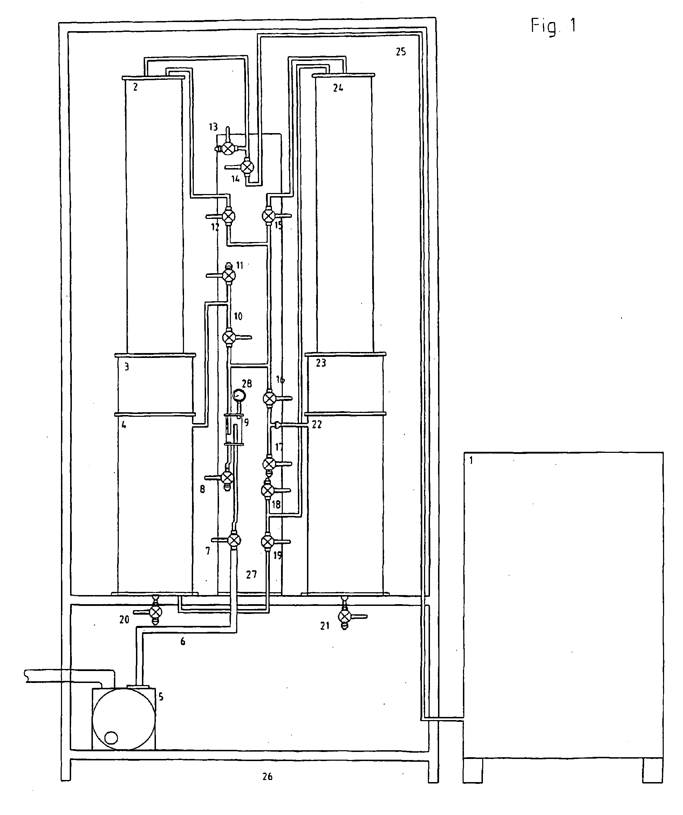

Fig. 1 - Show a schematic representation of an example of the present invention, developed to extract fungal spores.

### Drawing description:

1-Reservoir tank with the initial suspension, containing the spores mixture and other solid particles from which the spores should be separated.
2- Reservoir at the top side of first filter.
3- First filter (44 µm)
4- Reservoir at the bottom side of first filter.
5- Vacuum pump.
6- Vacuum transport tubes.
7- Control valve to vacuum admission to the system.
8- Cleaning valve of vacuum system liquid trap.
9- Vacuum system liquid trap.
10- Vacuum control valve of reservoir 4.
11 - Air entrance control valve to reservoir 4.
12- Vacuum control valve of reservoir 2.
13- Air entrance control valve to reservoir 2.
14- Suspension admission control valve to reservoir 2.
15- Vacuum control valve of reservoir 24.
16- Vacuum control valve of reservoir 22.
17- Air entrance control valve to reservoir 22.
18- Air entrance control valve to reservoir 24.
19- Suspension admission control valve to reservoir 24.
20- Cleaning valve of reservoir 4.
21 - Cleaning valve of reservoir 22.
22- Reservoir at the bottom side of second filter.
23- Second filter (10 µm).
24- Reservoir at the top side of second filter.
25- Suspension transport tubes.
26- Metal support structure for filtration, vacuum and control systems.
27- Metal plate support for the control system.
28- Vacuum controller.

### Detailed description of the invention

This invention uses the solid particles tridimensional form characteristics, which can be used when solids are in suspensions, to separate through wet filtration, a mixture of solid particles with different diameters, that can be retained in filtration fabrics of appropriate mesh dimensions, to separate a given set of particles of known said diameter, from others of also known set of said diameter. When said filtration is performed with particles under 100 µm of said diameter, a clogging layer is formed, that is overcome in this invention, by the use of a closed circuit under vacuum, to allow reverse suspension flow direction and air suction through the said filtration fabric. The solid particles can then be dryed, using air suction and collected on the top of the said filtration fabric.

The said separation process, is achieved in this invention, by the use of two filters with filtration fabric membrane, placed one after another, in a closed circuit, where the suspension flows. The first said filter having the mesh appropriate to collect the solid particles with bigger diameter, and the second said filter having the appropriate mesh to collect the solid particles with smaller diameter.

The said wet filtration process, accordingly to the broad form of the invention, preferably uses two vessels, one on the top of the membrane filter fabric, and another under the said filter. The process starts by filling the first vessel with appropriate suspension and is characterized by vacuum aplication to the vessel placed after the filtration membrane, and at the same time by air flow into the vessel placed before the filtration membrane, causing pressure over the fabric membrane due to the weigth of the liquid on the top vessel, and the vacuum in the under vessel, causing the liquid to flow through the membrane fabric filter.

The clogging of filter fabric membrane, which occurs during the filtration process, is overcome by the reverse flow direction of the suspension and by the air suction through the membrane fabric of the filter in the reverse direction of the suspension flow during filtration. The said reverse flow direction and air suction are applied during a short period, just enough to allow a few air bubles to appear in the suspension in the reverse direction of suspension flow during filtration. The said method to overcome clogging, comprises:
a) Initiating said separation, by said filtration under vacuum, until the flow stops or becomes too slow, caused by clogging of the filter fabric, and then,
b) stoping air entrance in the vessel placed before the filtration fabric, and simultaneously starting to apply vacuum in this vessel. At the same time stoping to apply vacuum in the vessel after the filter fabric and simultaneously allowing the air entrance in this vessel, and
c) allowing the reverse flow direction of suspension to occur until air bubbles start passing through the suspension, allowing the clogging layer to re-suspend again, and then
d) stoping air entrance in the vessel placed after the filtration fabric, and simultaneously starting to apply vacuum in this vessel. At the same time stoping to apply vacuum in the vessel before the filter fabric and simultaneously allowing the air entrance in this vessel, and
e) allowing the said suspension filtration to occur again until the flow stops or becomes too slow again, and then
f) repeating the procedure in c), that means to preform the said reverse flow direction and air suction through the filter fabric again, and
g) the succession of said filtration and said reverse flow and air suction, should be performed as many times as necessary to filter all the fed suspension.

The said separation process, is accomplished by performing the said filtration and the said process of overcome clogging, in the both said filtration filter fabrics, and is complemented by the elimination of the solids retained in the first filter fabric and by the collection of the solids in the second filter fabric.

The said collection can be made after drying the solids according to the following procedures:
a) After the said suspension filtration, all the suspension flow through the filter fabric, but the solid particles remain wet, although if the vacuum is kept in the vessel under the filtration fabric, with the air flowing through the solid deposit in the fabric, during relatively long periods, that will be enough to dry the solid residue resting on the filter fabric.
b) the speed of the drying process can be increased, by alternating the air flow direction during the drying process, by
c) closing the vacuum in the vessel under the filter fabric, and at the same time let the air flow into this vessel, and stop the air flow to the vessel before the filter fabric and apply vacuum to this vessel, and just after the vacuum drops,
d) repeat the operation stated in a), until the vacuum drops again, and alternate operations c) and a) during 3 to 4 times until the solid residue moisture reaches the desired level.

The collection of solids is performed by cleaning the fabric surface using a soft scraper tool to collect it, avoiding hurting the surface.

The vacuum used to preform the operations, should be in the range from -0,9 bar to -0.2 bar.

The fabric used can be made from several materials, but should allow a certain degree of deformation without loosing the mesh properties, under the stated vacuum conditions.

### Description of a particular form of the invention

Apparatus to separate fungal spores from solid medium, shown in Fig. 1.

Fungal spores must be bigger than 11 µm and smaller than 44 µm (average diameter 22 µm, 95 % ranging from 12 to 31 µm), mixed with solid medium particles used for growing the fungus, of variable diameter but all bigger than 44 µm.

Apparatus support structure:

Painted iron, with support bars and plates for the said 3 systems, over 4 metalic bars with wheels and breaks (Fig 1).

Apparatus constituition:

This apparatus is constituted by a support structure and three interconnected systems:
1^{st} System: the filtration system.
2^{nd} System: the vacuum system.
3^{rd} System: the control system.

The filtration system constitution:

Initial PVC reservoir (1), with 10001 capacity and 4 transparent acrylic glass cylindric reservoirs, in the following succession order (2, 4, 24, 22). Reservoir size: (2), and (24) - 88 cm hight and 18 cm diameter; (4) and (22) - 58 cm height and 25 cm diameter.

Two filters, with cylindric shape, made of hard PVC, 10 cm hight x 20 cm diameter, with nylon filtration fabric (supplied by Lockertex U.K. ). First filter (3) with 44 µm mesh and second filter (23) with 11 µm mesh.

Suspension transport tubes (25) in flexible PVC, 10 cm diameter.

The reservoirs (2, 4, 24, and 22) are placed in succession, connected by the filters (3, 23) or by the suspension transport tubes (25).

The filtration system operation:

The system is fed with suspension from the reservoir (1), through one tube (25), to the reservoir (2). The reservoir (2) is connected to the reservoir (4) by the filter (3), both supported by the support structure. The filter (3) stands in an easy operating aperture that has 2 closing rubber o-rings, one at the upper part and another at the lower part and which are strongly attached to the vessels, to allow the application of said vacuum. The reservoir (24) is fed with suspension from reservoir (4), by a tube (25). The reservoir (24) is connected to the reservoir (22) by the filter (23), both supported by the support structure, and using an easy operating aperture as described to filter (3). Both reservoirs (4) and (22) have draining tubes (25).

The vacuum system constituition:

Vacuum pump (5) Telstar (Spain), Torricelli type, model G6, 6 m3/h, 1450 rpm, 0,33 cv, 220 V, 50 Hz.

Liquid trap (9), built in PVC.

Air suction tubes (6), in flexible PVC, 8 cm diameter.

The vacuum pump is connected to the reservoirs (2), (4), (24) and (22), through vacuum pipes (6), with the vacuum trap (9) placed to avoid liquid suspension suction into the pump.

The vacuum system operation:

The vacuum pump (5), is connected to the lower end of the vacuum trap (9) through a tube (6). The vacuum trap (9) upper end is connected to all reservoirs (2), (4), (24) and (22), allowing air suction to the said reservoirs. Each of the said reservoirs has attached an air entrance (13), (11), (18) and (17) respectively, allowing air flow, if necessary. In reservoirs (4) and (22), the said air entrance is connected through a tube (6) and in reservoirs (2) and (24), the said air entrance is connected through a tube (25).

The control system constituition:

Vacuum controller (28) (0 to -1 bar).

Suspension flow control hydraulic valves (14), (20), (19) and (21).

Air entrance control hydraulic valves (8), (13), (11), (18) and (17).

Vacuum control hydraulic valves (7), (12), (10), (15) and (16).

The control system operation:

a) Vacuum system monitorization:

The vacuum controller is connected to the upper part of the liquid trap, allowing the acquisition of information about the vacuum in each part of the system, allowing to take the decisions in closing or opening the said air and/or vacuum valves to perform the vacuum and air flow cycles.

b) Filtration system control

B.1- Suspension flow control to reservoir (2) by valve (14)

B.2- Drainage control of reservoir (4) by valve (20)

B.3- Suspension flow control to reservoir (24) by valve (19)

B.4- Drainage control of reservoir (22) by valve (21)

c) Vacuum system control

C.1- Liquid trap (9) vacuum control by valve (7) and air flow and/or liquid drainage control by valve (8).

C.2- Reservoir (2) vacuum control by valve (12), and air slow control by valve (13).

C.3- Reservoir (4) vacuum control by valve (10), and air flow control by valve (11).

C.4- Reservoir (24) vacuum control by valve (15), and air flow control by valve (18).

C.5- Reservoir (22) vacuum control by valve (16), and air flow control by valve (17).

### Example 1:

This example relates to the procedure used to separate clamydospores of the fungus *Pochonia chlamydosporia* from the solid medium in which it was produced. The medium particles diameter ranges between 44 µm and 2000 µm, and the diameter of clamydospores is bigger than 10 µm and smaller than 44 µm (average diameter 22 µm, and 95 % confidance interval ranging from 12 to 31 µm)

### A. Initial situation:

A.1- Keep all valves closed except valves (7) and (8).

A.2- Keep vacuum pump (5) off.

A.3- Keep valves (7) and (8) open.

A.4- Fill reservoir (1) with 10² to 10³ l/day of raw suspension with a mixture of particles of said medium and 200 to 1000 g of said clamydospores.

### B. Starting work:

B.1- Close valves (7) and (8).

B.2- Put vacuum pump (5) on.

B.3- Open valve (7).

### C. Filling of reservoir (2).

C.1- Open valve (10).

C.2- When vacuum reaches -0.4 bar, open valve (14).

C.3- Open also valve (12) to speed the filling of reservoir (2).

C.4- When the suspension reaches the top of reservoir (2), close valve (14).

### D. Filtration through filter (3).

D.1 - Keep valve (10) open.

D.2- Close valve (12).

D.3- Open valve (13).

D.4- When all suspension passes to reservoir 4, close valve (10).

### E. Filling of reservoir (24).

E.1- *Open valve (16)*.

E.2- When vacuum reaches -0.4 bar, open valve (19).

E.3- Open valve (15) to speed the filling of reservoir (24).

E.4- When all suspension passes to reservoir (24), close valve (19).

### F. Filtration through filter (23).

F.1 - *Keep valve (16) open*.

F.2- Close valve (15).

F.3- Open valve (18).

F.4- When all suspension passes to reservoir (22), close valve (18).

F.5- Open valve (17).

F.6- *Open valve (21), and Jet the suspension to be discarded flow out*.

F.7- After empty out the reservoir (22) close valve (21).

### G. Filter unclogging during filtration.

G.1- Unclogging of filter (3).

G.1.1- Close valves (10) and (13).

G.1.2- Open valve (12) and then slowly open valve (11).

G.1.3- After the reverse direction of suspension flow progresses to cause air suction, let some air bubbles pass through filter (3) and then close valves (12) and (II).

G.1.4- Quickly after last operation, open valves (10) and (13).

G.2- Unclogging of filter (23).

G.2.1- Close valves (16) and (18).

G.2.2- Open valve (15) and then slowly open valve (17).

G.2.3- After the reverse direction of suspension flow progresses to cause air suction, let some air bubbles pass through filter (23) and then close valves (15*)* and (17).

G.2.4- Quickly after last operation, open valves (16) and (18).

G.3- The operations G.1 and G.2 should be repeated as many times as necessary to complete the filtrations D. and F.

### H. Clamydospores drying operation.

H.1- Let valves (16) and (18) open until the air flow passes through the filter (23) and vacuum reaches -0.2 bar or less.

H.2- Close valves (16) and (18) and open valve (15), and let the vacuum reach -0.9 bar.

H.3- Open the valve (17) and let the air flow through filter (23) until the vacuum reaches -0.2 bar or less.

H.4- Repeat operations H.1 to H.3 four to six times until the clamydospores moisture reaches the desired level.

### I. Finishing the extraction.

I.1- Let all reservoirs without suspension.

I.2- Close all valves except valves (13), (18) and (7).

I.3- Open valve (8), until the vacuum reaches 0.

I.4- Turn the Vacuum pump (5) off.

1.5- Keep the valve (7) open.

1.6- Open the aperture of filter (23), and collect the clamydospores, by scraping them to an appropriate container, with a soft tool, to avoid hurting the filter fabric.

I.7- *Open the aperture of filter* (*3*) *and discard the medium particles, by scraping it* out, with a soft tool, to avoid hurting the filter fabric.

Further suggestions and exemplifications that broaden the field and scope, either of the invented method or the particular apparatus presented here, will be appreciated.

## Claims

1. A method of separation of solid particles in a liquid suspension, by filter unclogging aided filtration, comprising:
separating the solid particles by means of size filtration by a filtration system having filters (3, 23) with filter fabrics, the filters (3, 23) being placed one after another, and having reservoirs (2, 4, 24, 22) upstream and downstream of the respective filter (3, 23), within which the liquid suspension flows, wherein the liquid suspension is forced to flow through the filters (3, 23) in a liquid suspension flow direction by supplying vacuum to the downstream reservoirs (4, 22) and by allowing air entrance into the upstream reservoirs (2, 24), and
unclogging the filter fabrics of the filters (3, 23) by supplying vacuum to the upstream reservoirs (2, 24) and by allowing air entrance into the downstream reservoirs (4, 22), whereby the liquid suspension is forced to flow through the filters (3, 23) in a reverse direction and whereby air is sucked through the filter fabrics of the filters (3, 23) in the said reverse direction.

2. The method according to claim 1, wherein the unclogging the filter fabrics of the filters (3, 23) comprises: alternately supplying vacuum to the upstream reservoirs (2, 24) and the downstream reservoirs (4, 22), and correspondingly allowing air entrance into the downstream reservoirs (4, 22) and the upstream reservoirs (2, 24), respectively.

3. The method according to claim 1 or 2, wherein the liquid suspension is forced to flow through the filters (3, 23) in a reverse direction until a few air bubbles appear in the liquid suspension remained in the upstream reservoirs (2, 24).

4. The method according to any one of claims 1 to 3, wherein the filters are made with filter fabrics of different mesh placed successively from the coarser to the fine.

5. The method according to any one of claims 1 to 4, wherein the solid particles collected on the filter fabrics of the filters (3, 23) are dried after filtration, by passing air through the obtained solid residue, and through the filter fabric alternately in the liquid suspension flow direction and the reverse direction several times.

6. The method according to any one of claims 1 to 5, operating with a vacuum of -0.2 to -0.9 bar.

7. Use of the method according to any one of claims 1 to 6 for separating fungal spores from suspensions comprising said spores and culture medium solid particles.

## Patentansprüche

1. Verfahren zur Abtrennung festen Partikeln in einer flüssigen Suspension, durch eine mit Gangbarmachen von Filtern untergestützt Filtration, umfassend:
Die Abtrennung der festen Partikeln mittels einer Filtration gemäß Größe, durch einen Filtriersystem das Filtern (3, 23) mit Filtriergewebe hat, wobei die Filtern (3, 23) aufeinanderfolgend liegen, und mit Behältern (2, 4, 24, 22) die flußaufwärts und flußabwärts den betreffend Filtern (3, 23) liegen, durch welche Innenraum die flüssige Suspension fließt, wobei die flüssige Suspension in einer Richtung des Ausfluß der Suspension durch den Filtern (3, 23) zwingend **dadurch** fließen mußt, daß ein Vakuum zu den flußabwärtsliegend Behältern (4, 22) angewendet wird und das Lufteinlaß in den flußaufwärtsliegend Behältern (2, 24) erlaubt wird, und
Die Gangbarmachen des Filtergewebe der Filtern (3, 23) mittels der Anwendung eines Vakuum in den flußaufwärtsliegend Behältern (2, 24) und mittels den Lufteinlaß in den flußabwärtsliegend Behältern (4, 22), wobei die flüssige Suspension durch den Filtern (3, 23) in einer umgekehrte Richtung zwingend fließen mußt, und wobei Luft durch den Filtriergewebe der Filtern (3, 23) in die obengenannte umgekehrte Richtung eingesaugt wird.

2. Verfahren nach Anspruch 1, in welcher das Gangbarmachen der Filtriergewebe der Filtern (3, 23) umfaßt:
ein Vakuum in den flußaufwärtsliegend Behältern (2, 24) und in den flußabwärtsliegend Behältern (4, 22) abwechselnd anwenden und, in einer entsprechende Weise, der Lufteinlaß beziehungsweise in den flußabwärtsliegend Behältern (4, 22) und in den flußaufwärtsliegend Behältern (2, 24) erlauben.

3. Verfahren nach Ansprüche 1 oder 2, in welcher die flüssige Suspension durch den Filtern (3, 23) gemäß eine umgekehrte Richtung zwingend fließen mußt, bis einige Luftbläschen in der Suspension die in den flußaufwärtsliegend Behältern (2, 24) blieb, erscheinen.

4. Verfahren nach einem der Ansprüche 1 bis 3, in welcher die Filtern (3, 23) aus Filtriergewebe mit verschiedene Maschengröße, die nacheinander von größer bis zu kleiner liegen, gemacht werden.

5. Verfahren nach einem der Ansprüche 1 bis 4, in welcher die auf den Filtriergewebe der Filtern (3, 23) eingesammelt feste Partikeln, nach der Filtrierung **dadurch** getrocknet werden, daß Luft manchmal durch den erhaltene feste Rückstand und durch den Filtriergewebe, in der Flußrichtung der flüssige Suspension und in den umgekehrte Richtung wechselnd durchfließen wird.

6. Verfahren nach einem der Ansprüche 1 bis 5, in welcher man mit einem Vakuum von -0,2 bis -0,9 Bar arbeitet.

7. Verwendung des Verfahren nach einem der Ansprüche 1 bis 6, zur Abtrennung von Spore von Pilzen aus Suspensionen die die genannte Sporen und feste Partikeln aus Kulturmedium umfassen.

## Revendications

1. Procédé de séparation de particules solides dans une suspension liquide, par filtration aidée avec désobstruction du filtre, comprenant:
La séparation des particules solides au moyen d'une filtration selon la dimension, à travers un système de filtration qui comprend des filtres (3, 23) aux tissus de filtre, les filtres (3, 23) étant placés un après l'autre, et possédant des réservoirs (2, 4, 24, 22) en amont et en aval du filtre (3, 23) correspondant, dans lesquels coule la suspension liquide, cette suspension liquide étant forcée à couler à travers les filtres (3, 23) selon une direction d'écoulement de la suspension liquide, par l'application d'un vide aux réservoirs en aval (4, 22) et en permettant l'entrée de l'air dans les réservoirs en amont (2, 24), et
La désobstruction des tissus de filtre (3, 23) par l'application d'un vide aux réservoirs en amont (2, 24) et en permettant l'entrée de l'air dans les réservoirs en aval (4, 22), la suspension liquide étant forcée à couler à travers les filtres (3, 23) en direction renversée et l'air étant ainsi aspiré à travers les tissus de filtre (3, 23) en la susdite direction renversée.

2. Procédé selon la revendication 1, dans lequel la désobstruction des tissus de filtre des filtres (3, 23) comprend:
L'application d'un vide alternativement aux réservoirs en amont (2, 24) et aux réservoirs en aval (4, 22) et, selon une façon correspondante, en permettant l'entrée de l'air dans les réservoirs en aval (4, 22) et dans les réservoirs en amont (2, 24), respectivement.

3. Procédé de selon les revendications 1 ou 2, dans lequel la suspension liquide est forcée à couler à travers les filtres (3, 23) selon une direction renversée, jusqu'à l'apparition de quelques bulles d'air au sein de la suspension liquide qui est restée dans les réservoirs en amont (2, 24).

4. Procédé selon l'une quelconque des revendications 1 à 3, dans lequel les filtres sont fabriqués avec des tissus de filtre possédant différentes mailles, placés successivement depuis les plus grandes mailles jusque les mailles plus serrées.

5. Procédé selon l'une quelconque des revendications 1 à 4, dans lequel les particules solides récoltées dans les tissus de filtre des filtres (3, 23) sont séchées après la filtration, en faisant passer de l'air alternativement à travers les résidus solides obtenus et à travers le tissu de filtre, selon la direction d'écoulement de la suspension liquide et selon la direction renversée, plusieurs fois.

6. Procédé selon l'une quelconque des revendications 1 à 5, dans lequel on travaille avec un vide de -0,2 jusqu'a -0,9 bar.

7. Utilisation du procédé selon l'une quelconque des revendications 1 à 6 pour la séparation de sporules de champignons à partir de suspensions qui comprennent les susdits sporules et des particules solides du milieu de culture.
